# EUROPEAN PATENT SPECIFICATION

(11) **EP 0 471 998 B1**
(45) Date of publication and mention of the grant of the patent: **26.02.1997**
(21) Application number: 91112444.4
(22) Date of filing: 24.07.1991
(51) Int. Cl.: C08F 297/04, C09J 153/02, C08L 53/02, C08L 23/02, C08L 25/06

(54) **Branched block copolymer, process for its preparation and use therefor**
Verzweigtes Blockcopolymer, Verfahren zur Herstellung und seine Verwendung
Copolymère bloc ramifié, procédé pour sa préparation et son application

(30) Priority: 25.07.1990 IT 2104190
(43) Date of publication of application: 26.02.1992
(73) Proprietor: ENICHEM ELASTOMERI S.r.l., I-20124 Milan (IT)
(72) Inventor: Custro, Sergio, I-48100 Ravenna (IT); Zazzetta, Alessandro, Dr., I-47023 Cesena, Forli' (IT)
(74) Representative: Weinhold, Peter, Dr.

(56) References cited:
- EP-A- 0 058 952
- GB-A- 2 061 961
- GB-A- 2 225 330
- US-A- 3 670 054
- US-A- 4 291 139
- US-A- 4 874 821
- WORLD PATENTS INDEX LATEST Derwent Publications Ltd., London, GB; AN 87-139969 & JP-A-62 079 211

## Description

The present invention relates to branched block copolymers, processes for their preparation and the use thereof in adhesive formulations to which they impart an excellent balance of adhesive, cohesive and rheological characteristics as well as resistance to oxidation at elevated temperatures, and in compositions with thermoplastic polymers for the production of articles with improved shock-resistance and transparency.

The anionic polymerization of dienic and vinylaromatic monomers in the presence of metal-alkyl and/or metal-aryl catalysts, resulting in so-called "living polymers", is a well-known technique and is described, e.g., by M.Schwarc in "Carbanions, Living Polymers and E1. Transfer Processes", Interscience Publishers, J.Wiley and Sons, New York, 1956.

With this living polymer technique it is possible, in particular, to prepare both linear and branched block copolymers, especially block copolymers of polybutadiene and polystyrene such as, for example, those described in US-A-3,078,254, 3,244,644, 3,265,765, 3,280,084, 3,594,452, 3,766,301, 3,937,760, 4,291,139, and EP-A-0 058 952.

These block copolymers are widely used, for example, in the fields of adhesives, in compositions with various plastic materials, in the shoe industry, etc.

One serious problem with these block copolymers is the difficulty of achieving a good balance of rheological characteristics, mechanical resistance and resistance to thermo-oxidation. For example, the well-known three-block copolymers of the type A-B-A (polystyrene-polybutadiene-polystyrene) normally show satisfactory mechanical characteristics but poor thermo-oxidation resistance. In addition, their rather high viscosity, both in the molten state and in solution, creates problems in the processing and transformation thereof. On the other hand, the known four-block (AB)₂ linear copolymers, containing similar polybutadiene blocks, generally have good rheological but poor mechanical properties. Similar considerations apply for linear multiblock (AB)ₙ copolymers, where n is an integer of higher than 2 and can reach a value of about 10.

US-A-4,874,821 describes a linear copolymer with four alternating blocks, B₁-A₁-B₂-A₂, having defined proportions of blocks and also containing, between blocks B₁ and A₁, a copolymeric random sequence formed by dienic and vinylaromatic monomer units. This kind of block copolymer is particularly suitable for use in adhesive formulations having good cohesion characteristics and thermo-oxidation stability.

Block copolymers are also used in compositions with thermoplastic polymers in order to endow the corresponding manufactured articles with high shock-resistance. The main problems in this field are the poor processability of the corresponding polymer mixtures and the low transparency of the products obtained from these mixtures.

There has now been found a special branched block copolymer with satisfactory overall rheological and mechanical characteristics, resistance to thermo-oxidation as well as transparency which is useful in adhesive formulations and which, when mixed with thermoplastic polymers, provides shock-resistant manufactured articles with improved transparency.

Accordingly, the present invention provides a branched block copolymer of general formula (I):

(B₁-T-A-B₂)ₙX (I)

wherein
- B₁ and B₂: are polymeric diene blocks (preferably blocks derived from one or more dienes having 4 to 20, particularly 4 to 12 carbon atoms, such as butadiene and isoprene);
- A: is a polyvinylaromatic block (preferably a block derived from one or more vinylaromatic monomers having 8 to 20 (e.g. 8 to 12) carbon atoms and optionally containing halogen atoms, such as styrene, α-methylstyrene and chloro-substituted derivatives thereof);
- T: is a random copolymer segment formed by dienic and vinylaromatic monomer units;
- X: is a coupling radical derived from a tri- or tetrachloro derivative of silicon, tin and germanium; and
- n: is an integer of from 3 to 4 ;
the above copolymer having a weight average molecular weight of from 60,000 to 500,000 (preferably 100,000 to 350,000); an A block content of from 20 to 80% by weight of the total copolymer; a (B₁+B₂) block content of from 20 to 80% by weight of the total copolymer; a weight ratio of blocks B₁ to blocks B₂ of from 0.1 to 1.0; and a T segment content of from 4 to 40% by weight of the total copolymer.

In the present invention, the preferred weight ratio in the block copolymer of blocks B₁ to blocks B₂ (which may be derived from the same or different diene(s) and are preferably formed by the same diene(s)) ranges from 0.2 to 0.5, the copolymeric segment T content ranges from 5 to 40% by weight of the block copolymer.

It is most preferred that in the block copolymer (I) block A is a polystyrene block and blocks B₁ and B₂ are polybutadiene blocks, the segment T is a random copolymer of butadiene and styrene units in quantities preferably ranging from 10 to 30% by weight of the copolymer, and X represents =Si= or CH₃Si≡.

The branched block copolymer of the present invention is preferably used in accordance with its composition. For instance, copolymers having a low content of vinylaromatic monomer units and a weight ratio of blocks B₂ to blocks B₁ close to unity, are advantageously combined with oils and asphaltic resins to afford adhesive formulations with good adhesion and cohesion characteristics. An example of an adhesive formulation is a hot-melt formulation. Moreover, copolymers with a high content of vinylaromatic monomer units show excellent transparency as well as a high shock-resistance. Therefore these copolymers can advantageously be used either as such or in admixture with common thermoplastic polymers (e.g. in weight ratios of from 9:1 to 1:9) to produce manufactured articles with improved shock-resistance and transparency. Suitable thermoplastic polymers are, e.g., polyolefins such as polyethylene and polypropylene, and particularly polystyrene. Corresponding manufactured articles can be used, e.g., in the packaging industry, especially for food.

Furthermore, copolymers of general formula (I) with an A block content of about 30 to 40% by weight and a weight ratio of blocks B₂ to blocks B₁ of about 10:1, when mixed with bitumen, afford manufactured articles showing good high and low temperature resistance.

The present invention also comprises processes for the production of the branched block copolymer of general formula (I).

More specifically, the process for the preparation of the block copolymer (I) comprises the following successive steps:
(a) Polymerization, by means of the living polymer technique, of a mixture of predetermined quantities of diolefin and vinylaromatic monomers until a complete, or almost complete, conversion of the monomers is achieved. Thus, a living copolymer of the type B₁-T-A is obtained.
(b) Addition of a predetermined amount of diene monomer to the copolymer obtained in step (a) and polymerization until a complete, or almost complete, conversion of the added diene monomer is achieved. Thus, a living copolymer of the type B₁-T-A-B₂ is obtained.
(c) Coupling of the living polymeric chains obtained in step (b) by means of a polyfunctional coupling agent. Thereby the branched block copolymer (I), having in its chain the copolymeric segment T, is obtained.
(d) Recovery of the branched block copolymer (I) containing the segment T.

Using the procedure described above, it is possible to vary the composition and length of the copolymeric segment T by adding, in the first polymerization step (a), polar compounds, such as ethers and amines, to the reaction system.

In particular, the polymerization steps are preferably carried out in an aliphatic and/or cycloaliphatic organic solvent, at temperatures ranging from 30 to 150°C and at a pressure equal to or higher than atmospheric pressure, in the presence of metal-alkyl or metal-aryl catalysts. The most preferred solvents are n-hexane and cyclohexane, while the most preferred reaction temperature ranges from 50 to 100°C and the most preferred catalyst is alkyl lithium wherein the alkyl group preferably contains from 3 to 7 (e.g. 4 to 6) carbon atoms. Said catalyst generally is used in amounts of from 0.025 to 0.20 parts by weight per 100 parts by weight of the total monomers. In the polymerization mixture, polar compounds such as ethers and amines can be present, usually at a maximum concentration of about 0.1% by weight with respect to the solvent.

In the coupling step, it is preferable to work at a temperature ranging from 110 to 125°C and in the presence of a coupling agent, selected from the tri- and tetra-chloro derivatives of silicon, tin and germanium. From a practical point of view it is preferred to use silicon tetrachloride and/or CH₃SiCl₃ as coupling agent. The most preferred diolefin is butadiene and the most preferred vinylaromatic monomer is styrene.

After the coupling step, the branched block copolymer can be recovered from the reaction mixture by using conventional techniques such as, e.g., evaporation of the solvent in a vapor stream and subsequent drying of the isolated copolymer.

The following examples are to give a more detailed illustration of the present invention without being a limitation thereof.

### Example 1 (Comparative)

600 g of anhydrous cyclohexane and 15 g of butadiene are charged into a 1 liter reactor under stirring. The temperature of the mixture is brought to 50°C and 0.102 g of sec-butyllithium in a n-hexane solution are then added. After 30 minutes of reaction the temperature of the mass reaches 60°C and the conversion of butadiene is almost complete. 75 g of styrene are then added and after 15 minutes of reaction the temperature of the mixture reaches 78°C and the conversion of styrene is almost complete. 10 g of butadiene are added. After 10 minutes of reaction the temperature of the mixture reaches 85°C and the conversion of butadiene is almost complete. 0.075 g of silicon tetrachloride, in a cyclohexane solution, are finally added and after 5 minutes the coupling reaction of the living chains is practically complete (98% yield).

10 g of triphenyl-nonylphosphite and 0.2 g of pentaerythritol tetrakis (3,3-di-tert-butyl-4-hydroxy-hydrocinnamate) are added to the above polymer solution. The recovery of the polymer is carried out by vapor flow distillation of the solvent and subsequent drying in an oven at 60°C for 24 hours.

A block copolymer of the type (B₁-A-B₂)ₙX where B₁ and B₂ are butadiene blocks, A is a styrene block, X = Si and n = 4 is thus obtained, said copolymer showing the following characteristics:
- MW 260,000
   (weight average molecular weight determined by GPC analysis)
- Total styrene 75 %
   (by weight based on the total styrene, determined by IR analysis)
- Styrene in the blocks 75 %
   (by weight, determined by decomposition with OsO₄)
- M.F.I. 4 g/10'
   (Melt Flow Index at 200°C and 5 kg)

The mechanical and optical characteristics of the test samples obtained by pressure moulding of the block copolymer at 180°C were as follows:
- transparency (%): 92
- ultimate tensile stress (kJ/cm²) 240
- ultimate elongation (%) 15
- module (kg/cm²) 9000
- Izod notched bar test 3.5
   (25°C; kg.cm/cm)
- M.F.I. (g/10') 9.5

### Example 2

6 kg of anhydrous cyclohexane, 250 g of butadiene and 700 g of styrene are charged into a 10 liter steel reaction vessel. The temperature of the mixture is brought to 50°C by means of hot water circulation in the jacket of the vessel and 0.79 g of sec-butyllithium in n-hexane solution are then added.

After 25 minutes of reaction, the temperature of the mixture reaches 80°C and the conversion of the monomers is almost complete. 50 g of butadiene are subsequently added and after 10 minutes of reaction the temperature of the mixture reaches 95°C and the conversion of the butadiene is almost complete. Finally 0.65 g of silicon tetrachloride, dissolved in cyclohexane, are added and after 5 minutes the coupling reaction of the living chains is substantially complete (99.9% yield).

Using the same procedure as in example 1, a block copolymer of the type (B₁-T-A-B₂)ₙX where B₁ and B₂ are butadiene blocks, A is the styrene block, segment T is a random copolymer of diene and styrene units in amounts of 4% by weight with respect to the copolymer, X = Si and n = 4 is recovered, said copolymer having the following characteristics:
- MW 250,000
- Total styrene 70%
- Styrene in the blocks 50%
- M.F.I. 5 g/10'

4 kg of the block copolymer obtained as described above are mixed with 4 kg of commerical "crystal" polystyrene having a MW (by GPC) of 250,000. The mass is charged into a twin-screw extruder equipped with a heated jacket and extruded, and the process is repeated twice to yield an intimate mixture. The material is then comminuted to chips having an average diameter of 0.5 cm. The mechanical and optical characteristics of the test samples obtained by pressure moulding of the chips, at 180°C, were as follows:
- transparency (%): 93
- ultimate tensile stress (kJ/cm²) 180
- ultimate elongation (%) 70
- module (kg/cm²) 10,500
- Izod notched bar test 3.6
   (25°C; kg.cm/cm)
- M.F.I. (g/10') 70

### Example 3

600 g of anhydrous cyclohexane, 8 g of butadiene and 46 g of styrene are charged into a 1 liter reaction vessel. The temperature of the mixture is brought to 50°C and 0.18 g of sec-butyllithium (2.6 .10⁻³ moles) in n-hexane solution are then added.

After 25 minutes of reaction, the temperature of the mixture reaches 60°C and the conversion of the monomers is almost complete. 46 g of butadiene are subsequently added and after 10 minutes of reaction the temperature of the mixture reaches 80°C and the conversion of the butadiene is almost complete. Finally 0.15 g of CH₃SiCl₃,dissolved in cyclohexane, are added and after 5 minutes the coupling reaction of the living chains is practically complete (97% yield).

Using the same procedure as in example 1, a block copolymer of the type (B₁-T-A-B₂)ₙX where B₁ and B₂ are butadiene blocks, A is a styrene block, segment T is a random copolymer of butadiene and styrene units in amounts of 5% by weight with respect to the copolymer, X = CH₃Si and n = 3 is recovered, said copolymer having the following characteristics:
- MW 100,000
- Total styrene 46%
- Styrene in the blocks 41%
- M.F.I. 11 g/10'

The block copolymer obtained as described above is converted into a hot melt composition containing:

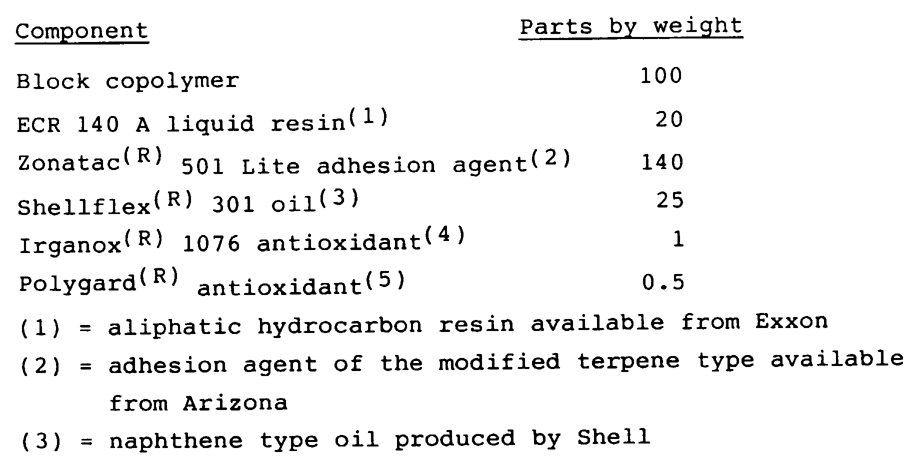

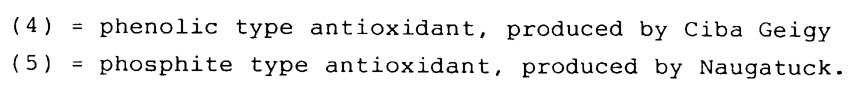

The following adhesion characteristics were determined on the above formulation:

| | |
|---|---|
| Polyken tack (g; ASTM 2979) | 230 |
| Loop tack (g/2.5 cm; PSTC 5) | 230 |
| Peeling (g/2.5 cm; PSTC 1) | 2.000 |
| Holding power (g/2.5 cm; PSTC 7) | 35 |
| (PSTC = Pressure Sensitive Testing Council) | |

The following thermo-oxidation characteristics were also determined on the above formulation.

| Period (days) | Brookfield viscosity; cps, 180°C |
|---|---|
| 0 | 12,500 |
| 2 | 18,500 |
| 4 | 23,000 |
| 6 | 26,000 |

### Example 4

3 liters of anhydrous cyclohexane containing 0.03 g of tetrahydrofuran, 100 g of butadiene and 500 g of styrene are charged into a 5 liter stirred steel reactor. The temperature of the mixture is brought to 50°C and 2.0 g of n-butyllithium in n-hexane solution are then added.

After 25 minutes of reaction, the temperature of the mixture reaches 65°C and the conversion of the monomers is almost complete. 400 g of butadiene are subsequently added and after 10 minutes of reaction the temperature of the mixture reaches 95°C and the conversion of the butatiene is almost complete. Finally 1.31 g of silicon tetrachloride, dissolved in cyclohexane, are added and after 5 minutes the coupling reaction of the living chains is practically complete (98% yield).

Using the same procedure as in example 1, a block copolymer of the type (B₁-T-A-B₂)ₙX were B₁ and B₂ are butadiene blocks, A is a styrene block, segment T is a random copolymer of diene and styrene units in amounts of 18% by weight with respect to the copolymer, X = Si and n = 4 is recovered, said copolymer having the following characteristics:

| | |
|---|---|
| - MW | 145,000 |
| - Total styrene | 50% |
| - Styrene in the blocks | 40% |
| - M.F.I. | 12 g/10' |

1 kg of the block copolymer obtained as described above is mixed with 3 kg of commerical "crystal" polystyrene having a MW (by GPC) of 250,000 and with 2 kg of high density polyethylene (HDPE). The mixing is carried out in a Banbury mixer at 200°C (3 minute-cycles). The mechanical characteristics of the test samples obtained by injection moulding of the mixture at 195°C were as follows:

| | |
|---|---|
| - ultimate tensile stress (N/mm²) | 20 |
| - ultimate elongation (%) | 60 |
| - module (N/mm²) | 1500 |
| - Izod notched bar test (J/m) | 350 |

## Claims (Claims for the following Contracting State(s): AT, BE, CH, LI, DE, DK, FR, GB, GR, IT, LU, NL, SE)

1. Branched block copolymer of general formula (I):
(B₁-T-A-B₂)ₙX (I)
wherein:
B₁ and B₂ are polydienic blocks;
A is a polyvinylaromatic block;
T is a random copolymeric segment formed by dienic and vinylaromatic monomer units;
X is a coupling radical derived from a tri- or tetrachloro derivative of silicon, tin and germanium; and
n is an integer of from 3 to 4;
the above copolymer having a weight average molecular weight of from 60,000 to 500,000; an A block content of from 20 to 80% by weight; a (B₁+B₂) block content of from 20 to 80% by weight; a weight ratio of blocks B₁ to blocks B₂ of from 0.1 to 1.0; and a T segment content of from 4 to 40% by weight.

2. Copolymer according to claim 1, wherein the weight ratio of blocks B₁ to blocks B₂ ranges from 0.2 to 0.5; and the copolymeric segment T content ranges from 5 to 40, particularly from 10 to 30% by weight of the total block copolymer.

3. Copolymer according to any one of claims 1 and 2, wherein block A is a polystyrene block and/or blocks B₁ and B₂ both are polybutadiene blocks and/or segment T is a random copolymer block of butadiene and styrene monomer units and/or X is =Si= or CH₃Si≡.

4. Process for the preparation of the copolymer according to any one of claims 1 to 3,
comprising:
(a) polymerization, by means of the living polymer technique, of a mixture of diolefin and vinylaromatic monomer up to the complete, or almost complete, conversion of the monomers;
(b) addition of diene monomer to the copolymer obtained in step (a) and continuation of the polymerization up to the complete, or almost complete, conversion of the added diene monomer; and
(c) coupling of the living polymeric chains obtained in step (b) by means of a polyfunctional coupling agent.

5. Process according to claim 4, wherein the polymerization steps are carried out in an aliphatic or cycloaliphatic organic solvent at a temperature of from 30 to 150°C and atmospheric or superatmospheric pressure in the presence of metal-alkyl and/or metal-aryl catalysts.

6. Process according to claim 5, wherein the solvent is n-hexane and/or cyclohexane, the reaction temperature ranges from 50 to 100°C, the catalyst is a C₃-C₇-alkyl-lithium and said catalyst is used in amounts of from 0.025 to 0.20 parts by weight per 100 parts by weight of the total monomers.

7. Process according to any one of claims 4 to 6, wherein the coupling step is carried out at a temperature of from 110 to 125°C in the presence of coupling agents selected from tri- and tetra-chloro derivatives of silicon, tin and germanium, and particularly is selected from SiCl₄ and CH₃SiCl₃.

8. Process according to any one of claims 4 to 7, wherein the diolefin is butadiene and/or the vinylaromatic monomer is styrene.

9. Adhesive composition, comprising copolymers according to any one of claims 1 to 3.

10. Polymeric composition, comprising the copolymers according to any one of claims 1 to 3 and thermoplastic polymer, particularly polyethylene, polypropylene and/or polystyrene.

## Claims (Claims for the following Contracting State(s): ES)

1. Process for the preparation of a branched block copolymer of general formula (I):
(B₁-T-A-B₂)ₙX (I)
wherein:
B₁ and B₂ are polydienic blocks;
A is a polyvinylaromatic block;
T is a random copolymeric segment formed by dienic and vinylaromatic monomer units;
X is a coupling radical derived from a tri- or tetrachloro derivative of silicon, tin and germanium, and
n is an integer of from 3 to 4;
the above copolymer having a weight average molecular weight of from 60,000 to 500,000; an A block content of from 20 to 80% by weight; a (B₁+B₂) block content of from 20 to 80% by weight; a weight ratio of blocks B₁ to blocks B₂ of from 0.1 to 1.0; and a T segment content of from 4 to 40% by weight,
comprising:
(a) polymerization, by means of the living polymer technique, of a mixture of diolefin and vinylaromatic monomer up to the complete, or almost complete, conversion of the monomers;
(b) addition of diene monomer to the copolymer obtained in step (a) and continuation of the polymerization up to the complete, or almost complete, conversion of the added diene monomer; and
(c) coupling of the living polymeric chains obtained in step (b) by means of a polyfunctional coupling agent.

2. Process according to claim 1, wherein the weight ratio of blocks B₁ to blocks B₂ ranges from 0.2 to 0.5; and the copolymeric segment T content ranges from 5 to 40, particularly from 10 to 30% by weight of the total block copolymer

3. Process according to any one of claims 1 and 2, wherein block A is a polystyrene block and/or blocks B₁ and B₂ both are polybutadiene blocks and/or segment T is a random copolymer block of butadiene and styrene monomer units and/or X is =Si= or CH₃Si≡.

4. Process according to claim 1,
wherein the polymerization steps are carried out in an aliphatic or cycloaliphatic organic solvent at a temperature of from 30 to 150°C and atmospheric or superatmospheric pressure in the presence of metal-alkyl and/or metal-aryl catalysts.

5. Process according to claim 4, wherein the solvent is n-hexane and/or cyclohexane, the reaction temperature ranges from 50 to 100°C, the catalyst is a C₃-C₇-alkyl-lithium and said catalyst is used in amounts of from 0.025 to 0.20 parts by weight per 100 parts by weight of the total monomers.

6. Process according to any one of claims 1 to 5, wherein the coupling step is carried out at a temperature of from 110 to 125°C in the presence of coupling agents selected from tri- and tetra-chloro derivatives of silicon, tin and germanium, and particularly is selected from SiCl₄ and CH₃SiCl₃.

7. Process according to any one of claims 1 to 6, wherein the diolefin is butadiene and/or the vinylaromatic monomer is styrene.

8. Branched block copolymer of general formula (I):
(B₁-T-A-B₂)ₙX (I)
wherein:
B₁ and B₂ are polydienic blocks;
A is a polyvinylaromatic block;
T is a random copolymeric segment formed by dienic and vinylaromatic monomer units;
X is a coupling radical derived from a tri- or tetrachloro derivative of silicon, tin and germanium, and
n is an integer of from 3 to 4;
the above copolymer having a weight average molecular weight of from 60,000 to 500,000; an A block content of from 20 to 80% by weight; a (B₁+B₂) block content of from 20 to 80% by weight; a weight ratio of blocks B₁ to blocks B₂ of from 0.1 to 1.0; and a T segment content of from 4 to 40% by weight.

9. Copolymer according to claim 8, wherein the weight ratio of blocks B₁ to blocks B₂ ranges from 0.2 to 0.5; and the copolymeric segment T content ranges from 5 to 40, particularly from 10 to 30% by weight of the total block copolymer.

10. Copolymer according to any one of claims 8 and 9, wherein block A is a polystyrene block and/or blocks B₁ and B₂ both are polybutadiene blocks and/or segment T is a random copolymer block of butadiene and styrene monomer units and/or X is =Si= or CH₃Si≡.

11. Adhesive composition, comprising copolymers according to any one of claims 8 to 10.

12. Polymeric composition, comprising the copolymers according to any one of claims 8 to 10 and thermoplastic polymer, particularly polyethylene, polypropylene and/or polystyrene.

## Patentansprüche (Patentansprüche für folgende(n) Vertragsstaat(en): AT, BE, CH, LI, DE, DK, FR, GB, GR, IT, LU, NL, SE)

1. Verzweigtes Blockcopolymer der allgemeinen Formel (I):
(B₁-T-A-B₂)ₙX (I)
worin:
B₁ und B₂ Polydienblöcke sind;
A ein Polyvinylaromatischer Block ist;
T ein statistisches Copolymersegment ist, gebildet aus Dien- und aromatischen Vinylmonomer-Einheiten;
X eine Kupplungsgruppe bedeutet, abgeleitet von einem Tri- oder Tetrachlor-Derivat von Silizium, Zinn und Germanium und
n eine ganze Zahl von 3 bis 4 ist;
wobei das obige Copolymer einen Gewichtsdurchschnitt des Molekulargewichts von 60.000 bis 500.000 aufweist; einen Gehalt an Block A von 20 bis 80 Gew.-% hat; einen Gehalt an Block (B₁+B₂) von 20 bis 80 Gew.-% hat; ein Gewichtsverhältnis der Blöcke B₁ zu den Blöcken B₂ von 0,1 bis 1,0 aufweist und einen Gehalt an Segment T von 4 bis 40 Gew.-% aufweist.

2. Copolymer nach Anspruch 1, wobei das Gewichtsverhältnis der Blöcke B₁ zu den Blöcken B₂ von 0,2 bis 0,5 beträgt und der Gehalt an Copolymersegment T zwischen 5 und 40, insbesondere zwischen 10 und 30 Gew.-% des gesamten Blockcopolymers beträgt.

3. Copolymer nach einem der Ansprüche 1 und 2, wobei Block A ein Polystyrolblock ist und/oder die Blöcke B₁ und B₂ jeweils Polybutadienblöcke sind und/oder das Segment T ein statistischer Copolymerblock aus Butadien- und Styrolmonomereinheiten ist und/oder X =Si= oder CH₃Si≡ bedeutet.

4. Verfahren zur Herstellung des Copolymers nach einem der Ansprüche 1 bis 3, welches umfaßt:
(a) Polymerisieren mittels der Methode der "lebenden Polymere" einer Mischung von Diolefin und aromatischem Vinylmonomer bis zur vollständigen oder fast vollständigen Umsetzung der Monomere;
(b) Zugabe von Dienmonomer zu dem in Schritt (a) erhaltenen Copolymer und Fortsetzung der Polymerisation bis zur vollständigen oder fast vollständigen Umsetzung des zugegeben Dienmonomers und
(c) Kupplung der in Schritt (b) erhaltenen Ketten der lebenden Polymere mittels eines polyfunktionellen Kupplungsmittels.

5. Verfahren nach Anspruch 4, wobei die Polymerisationsschritte in einem aliphatischen oder cycloaliphatischen organischen Lösungsmittel bei einer Temperatur von 30° bis 150° C und bei atmosphärischem oder überatmosphärischem Druck in Anwesenheit von Metall-Alkyl- und/oder Metall-Aryl-Katalysatoren durchgeführt werden.

6. Verfahren nach Anspruch 5, wobei das Lösungsmittel n-Hexan und/oder Cyclohexan ist, die Temperatur im Bereich von 50° bis 100° C liegt, der Katalysator eine C₃-C₇-Alkyl-Lithium-Verbindung ist, und der genannte Katalysator in Mengen von 0,025 bis 0,20 Gew.-Teilen pro 100 Gew.-Teile der gesamten Monomere verwendet wird.

7. Verfahren nach einem der Ansprüche 4 bis 6, wobei der Kupplungsschritt bei einer Temperatur von 110° bis 125° C durchgeführt wird, und zwar in Anwesenheit von Kupplungsmitteln, ausgewählt aus Tri- und Tetrachlor-Derivaten von Silizium, Zinn und Germanium, und insbesondere SiCl₄ bzw. CH₃SiCl₃.

8. Verfahren nach einem der Ansprüche 4 bis 7, wobei das Diolefin Butadien und/oder das aromatische Vinylmonomer Styrol ist.

9. Klebemittelzusammensetzung, die Copolymere nach einem der Ansprüche 1 bis 3 umfaßt.

10. Polymere Zusammensetzung, die Copolymere nach einem der Ansprüche 1 bis 3 und thermoplastisches Polymer, insbesondere Polyethylen, Polypropylen und/oder Polystyrol, umfaßt.

## Patentansprüche (Patentansprüche für folgende(n) Vertragsstaat(en): ES)

1. Verfahren zur Herstellung eines verzweigten Blockcopolymers der allgemeinen Formel (I):
(B₁-T-A-B₂)ₙX (I)
worin:
B₁ und B₂ Polydienblöcke sind;
A ein Polyvinylaromatischer Block ist;
T ein statistisches Copolymersegment ist, gebildet aus Dien- und aromatischen Vinylmonomer-Einheiten;
X eine Kupplungsgruppe bedeutet, abgeleitet von einem Tri- oder Tetrachlor-Derivat von Silizium, Zinn und Germanium und
n eine ganze Zahl von 3 bis 4 ist;
wobei das obige Copolymer einen Gewichtsdurchschnitt des Molekulargewichts von 60.000 bis 500.000 aufweist; einen Gehalt an Block A von 20 bis 80 Gew.-% hat; einen Gehalt an Block (B₁+B₂) von 20 bis 80 Gew.-% hat; ein Gewichtsverhältnis der Blöcke B₁ zu den Blöcken B₂ von 0,1 bis 1,0 aufweist und einen Gehalt an Segment T von 4 bis 40 Gew.-% aufweist, wobei das Verfahren umfaßt:
(a) Polymerisieren mittels der Methode der "lebenden Polymere" einer Mischung von Diolefin und aromatischem Vinylmonomer bis zur vollständigen oder fast vollständigen Umsetzung der Monomere;
(b) Zugabe von Dienmonomer zu dem in Schritt (a) erhaltenen Copolymer und Fortsetzung der Polymerisation bis zur vollständigen oder fast vollständigen Umsetzung des zugegeben Dienmonomers und
(c) Kupplung der in Schritt (b) erhaltenen Ketten der lebenden Polymere mittels eines polyfunktionellen Kupplungsmittels.

2. Verfahren nach Anspruch 1, wobei das Gewichtsverhältnis der Blöcke B₁ zu den Blöcken B₂ von 0,2 bis 0,5 beträgt und der Gehalt an Copolymersegment T zwischen 5 und 40, insbesondere zwischen 10 und 30 Gew.-% des gesamten Blockcopolymers beträgt.

3. Verfahren nach einem der Ansprüche 1 und 2, wobei Block A ein Polystyrolblock ist und/oder die Blöcke B₁ und B₂ jeweils Polybutadienblöcke sind und/oder das Segment T ein statistischer Copolymerblock aus Butadien- und Styrolmonomereinheiten ist und/oder X =Si= oder CH₃Si≡ bedeutet.

4. Verfahren nach Anspruch 1, wobei die Polymerisationsschritte in einem aliphatischen oder cycloaliphatischen organischen Lösungsmittel bei einer Temperatur von 30° bis 150° C und bei atmosphärischem oder überatmosphärischem Druck in Anwesenheit von Metall-Alkyl- und/oder Metall-Aryl-Katalysatoren durchgeführt werden.

5. Verfahren nach Anspruch 4, wobei das Lösungsmittel n-Hexan und/oder Cyclohexan ist, die Reaktionstemperatur im Bereich von 50° bis 100° C liegt, der Katalysator eine C₃-C₇-Alkyl-Lithium-Verbindung ist und der genannte Katalysator in Mengen von 0,025 bis 0,20 Gew.-Teilen pro 100 Gew.-Teile der gesamten Monomere verwendet wird.

6. Verfahren nach einem der Ansprüche 1 bis 5, wobei der Kupplungsschritt bei einer Temperatur von 110° bis 125° C durchgeführt wird, und zwar in Anwesenheit von Kupplungsmitteln, ausgewählt aus Tri- und Tetrachlor-Derivaten von Silizium, Zinn und Germanium, und insbesondere SiCl₄ bzw. CH₃SiCl₃.

7. Verfahren nach einem der Ansprüche 1 bis 6, wobei das Diolefin Butadien und/oder das aromatische Vinylmonomer Styrol ist.

8. Verzweigtes Blockcopolymer der allgemeinen Formel (I):
(B₁-T-A-B₂)ₙX (I)
worin:
B₁ und B₂ Polydienblöcke sind;
A ein Polyvinylaromatischer Block ist;
T ein statistisches Copolymersegment ist, gebildet aus Dien- und aromatischen Vinylmonomer-Einheiten;
X eine Kupplungsgruppe bedeutet, abgeleitet von einem Tri- oder Tetrachlor-Derivat von Silizium, Zinn und Germanium und
n eine ganze Zahl von 3 bis 4 ist;
wobei das obige Copolymer einen Gewichtsdurchschnitt des Molekulargewichts von 60.000 bis 500.000 aufweist; einen Gehalt an Block A von 20 bis 80 Gew.-% hat; einen Gehalt an Block (B₁+B₂) von 20 bis 80 Gew.-% hat; ein Gewichtsverhältnis der Blöcke B₁ zu den Blöcken B₂ von 0,1 bis 1,0 aufweist und einen Gehalt an Segment T von 4 bis 40 Gew.-% aufweist.

9. Copolymer nach Anspruch 8, wobei das Gewichtsverhältnis der Blöcke B₁ zu den Blöcken B₂ von 0,2 bis 0,5 beträgt und der Gehalt an Copolymersegment T zwischen 5 und 40, insbesondere zwischen 10 und 30 Gew.-% des gesamten Blockcopolymers beträgt.

10. Copolymer nach einem der Ansprüche 8 und 9, wobei Block A ein Polystyrolblock ist und/oder die Blöcke B₁ und B₂ jeweils Polybutadienblöcke sind und/oder das Segment T ein statistischer Copolymerblock aus Butadien- und Styrolmonomereinheiten ist und/oder X =Si= oder CH₃Si≡ bedeutet.

11. Klebemittelzusammensetzung, die Copolymere nach einem der Ansprüche 8 bis 10 umfaßt.

12. Polymere Zusammensetzung, die Copolymere nach einem der Ansprüche 8 bis 10 und thermoplastisches Polymer, insbesondere Polyethylen, Polypropylen und/oder Polystyrol, umfaßt.

## Revendications (Revendications pour l'(les) Etat(s) contractant(s) suivant(s): AT, BE, CH, LI, DE, DK, FR, GB, GR, IT, LU, NL, SE)

1. Copolymère à blocs ramifié répondant à la formule générale (I):
(B₁-T-A-B₂)ₙX (I)
dans laquelle
B₁ et B₂ représentent des blocs polydiéniques ;
A représente un bloc polyvinylaromatique ;
T représente un segment copolymérique statistique formé par des motifs monomères vinyl-aromatiques et diéniques ;
X représente un radical de couplage dérivé d'un dérivé de silicium, d'étain et de germanium, trichloré ou tétrachloré ; et
n représente un nombre entier compris entre 3 et 4 ;
le copolymère ci-dessus présentant une masse moléculaire moyenne en poids comprise entre 60 000 et 500 000 ; une teneur en bloc A comprise entre 20 et 80 % en poids ; une teneur en bloc (B₁ + B₂) comprise entre 20 et 80 % en poids ; un rapport pondéral des blocs B₁ aux blocs B₂ compris entre 0,1 et 1,0 ; et une teneur en segment T comprise entre 4 et 40 % en poids.

2. Copolymère conforme à la revendication 1, dans lequel le rapport pondéral des blocs B₁ aux blocs B₂ est compris entre 0,2 et 0,5, et la teneur en segment T copolymérique se situe dans l'intervalle allant de 5 à 40 % en poids, en particulier dans l'intervalle allant de 10 à 30 % en poids du copolymère à blocs total.

3. Copolymère conforme à l'une quelconque des revendications 1 et 2, dans lequel le bloc A représente un bloc de polystyrène et/ou les blocs B₁ et B₂ sont des blocs de polybutadiène et/ou le segment T est un bloc de copolymère statistique comportant des motifs butadiéniques hydrogénés et des motifs styréniques, et/ou X représente =Si= ou CH₃Si≡.

4. Procédé pour préparer le copolymère conforme à l'une quelconque des revendications 1 à 3, comprenant :
(a) la polymérisation, utilisant la technique du polymère vivant, d'un mélange de dioléfine et de monomère vinyl-aromatique jusqu'à la conversion totale ou presque totale des monomères ;
(b) l'addition d'un monomère diénique au copolymère obtenu dans l'étape (a) et poursuite de la polymérisation jusqu'à la conversion totale ou presque totale du monomère diénique ajouté ; et
(c) le couplage des chaînes polymériques vivantes obtenues dans l'étape (b) au moyen d'un agent de couplage polyfonctionnel.

5. Procédé conforme à la revendication 4, dans lequel on effectue les étapes de polymérisation dans un solvant organique aliphatique ou cycloaliphatique à une température comprise entre 30 et 150° C et sous une pression atmosphérique ou supérieure à la pression atmosphérique, en présence de catalyseurs de type métal alkylé et/ou métal arylé.

6. Procédé conforme à la revendication 5, dans lequel le solvant est le n-hexane et/ou le cyclohexane, la température réactionnelle se situe dans l'intervalle allant de 50 à 100° C, le catalyseur est un (alkyl en C₃-C₇)lithium, et ledit catalyseur est utilisé en des quantités comprises entre 0,025 et 0,20 partie en poids pour 100 parties en poids de monomères totaux.

7. Procédé conforme à l'une quelconque des revendications 4 à 6, dans lequel on effectue l'étape de couplage à une température comprise entre 110 et 125° C en présence d'agents de couplage choisis parmi les dérivés de silicium, d'étain et de germanium, trichlorés et tétrachlorés, et en particulier choisis parmi SiCl₄ et CH₃SiCl₃.

8. Procédé conforme à l'une quelconque des revendications 4 à 7, dans lequel la dioléfine est le butadiène et/ou le monomère vinylaromatique est le styrène.

9. Composition adhésive comprenant des copolymères conformes à l'une quelconque des revendications 1 à 3.

10. Composition polymérique comprenant les copolymères conformes à l'une quelconque des revendications 1 à 3, et un polymère thermoplastique, en particulier le polyéthylène, le polypropylène et/ou le polystyrène.

## Revendications (Revendications pour l'(les) Etat(s) contractant(s) suivant(s): ES)

1. Procédé pour préparer un copolymère à blocs ramifié répondant à la formule générale (I) :
(B₁-T-A-B₂)ₙX (I)
dans laquelle
B₁ et B₂ représentent des blocs polydiéniques ;
A représente un bloc polyvinylaromatique ;
T représente un segment copolymérique statistique formé par des motifs monomères vinyl-aromatiques et diéniques ;
X représente un radical de couplage dérivé d'un dérivé de silicium, d'étain et de germanium, trichloré ou tétrachloré ; et
n représente un nombre entier compris entre 3 et 4 ;
le copolymère ci-dessus présentant une masse moléculaire moyenne en poids comprise entre 60 000 et 500 000 ; une teneur en bloc A comprise entre 20 et 80 % en poids ; une teneur en bloc (B₁ + B₂) comprise entre 20 et 80 % en poids ; un rapport pondéral des blocs B₁ aux blocs B₂ compris entre 0,1 et 1,0 ; et une teneur en segment T comprise entre 4 et 40 % en poids,
comprenant:
(a) la polymérisation, utilisant la technique du polymère vivant, d'un mélange de dioléfine et de monomère vinyl-aromatique jusqu'à la conversion totale ou presque totale des monomères ;
(b) l'addition d'un monomère diénique au copolymère obtenu dans l'étape (a) et poursuite de la polymérisation jusqu'à la conversion totale ou presque totale du monomère diénique ajouté ; et
(c) le couplage des chaînes polymériques vivantes obtenues dans l'étape (b) au moyen d'un agent de couplage polyfonctionnel.

2. Procédé conforme à la revendication 1, dans lequel le rapport pondéral des blocs B₁ aux blocs B₂ est compris entre 0,2 et 0,5, et la teneur en segment T copolymérique se situe dans l'intervalle allant de 5 à 40 % en poids, en particulier dans l'intervalle allant de 10 à 30 % en poids du copolymère à blocs total.

3. Procédé conforme à l'une quelconque des revendications 1 et 2, dans lequel le bloc A représente un bloc de polystyrène et/ou les blocs B₁ et B₂ sont des blocs de polybutadiène et/ou le segment T est un bloc de copolymère statistique comportant des motifs butadiéniques hydrogénés et des motifs styréniques, et/ou X représente =Si= ou CH₃Si≡.

4. Procédé conforme à la revendication 1, dans lequel on effectue les étapes de polymérisation dans un solvant organique aliphatique ou cycloaliphatique à une température de 30 à 150° C et sous une pression atmosphérique ou supérieure à la pression atmosphérique, en présence d'un catalyseur de type métal alkylé et/ou métal arylé.

5. Procédé conforme à la revendication 4, dans lequel le solvant est le n-hexane et/ou le cyclohexane, la température réactionnelle se situe dans l'intervalle allant de 50 à 100° C, le catalyseur est un (alkyl en C₃-C₇)lithium, et ledit catalyseur est utilisé en des quantités comprises entre 0,025 et 0,20 partie en poids pour 100 parties en poids de monomères totaux.

6. Procédé conforme à l'une quelconque des revendications 1 à 5, dans lequel on effectue l'étape de couplage à une température comprise entre 110 et 125° C en présence d'agents de couplage choisis parmi les dérivés de silicium, d'étain et de germanium, trichlorés et tétrachlorés, et en particulier choisis parmi SiCl₄ et CH₃SiCl₃.

7. Procédé conforme à l'une quelconque des revendications 1 à 6, dans lequel la dioléfine est le butadiène et/ou le monomère vinyl-aromatique est le styrène.

8. Copolymère à blocs ramifié répondant à la formule générale (I) :
(B₁-T-A-B₂)ₙX (I)
dans laquelle
B₁ et B₂ représentent des blocs polydiéniques ;
A représente un bloc polyvinylaromatique ;
T représente un segment copolymérique statistique formé par des motifs monomères vinyl-aromatiques et diéniques ;
X représente un radical de couplage dérivé d'un dérivé de silicium, d'étain et de germanium, trichloré ou tétrachloré ; et
n représente un nombre entier compris entre 3 et 4 ;
le copolymère ci-dessus présentant une masse moléculaire moyenne en poids comprise entre 60 000 et 500 000 ; une teneur en bloc A comprise entre 20 et 80 % en poids ; une teneur en bloc (B₁ + B₂) comprise entre 20 et 80 % en poids ; un rapport pondéral des blocs B₁ aux blocs B₂ compris entre 0,1 et 1,0 ; et une teneur en segment T comprise entre 4 et 40 % en poids.

9. Copolymère conforme à la revendication 8, dans lequel le rapport pondéral des blocs B₁ aux blocs B₂ est compris entre 0,2 et 0,5, et la teneur en segment T copolymérique se situe dans l'intervalle allant de 5 à 40 % en poids, en particulier dans l'intervalle allant de 10 à 30 % en poids du copolymère à blocs total.

10. Copolymère conforme à l'une quelconque des revendications 8 et 9, dans lequel le bloc A représente un bloc de polystyrène et/ou les blocs B₁ et B₂ sont des blocs de polybutadiène et/ou le segment T est un bloc de copolymère statistique comportant des motifs butadiéniques hydrogénés et des motifs styréniques, et/ou X représente =Si= ou CH₃Si≡.

11. Composition adhésive comprenant des copolymères conformes à l'une quelconque des revendications 8 à 10.

12. Composition polymérique comprenant les copolymères conformes à l'une quelconque des revendications 8 à 10, et un polymère thermoplastique, en particulier le polyéthylène, le polypropylène et/ou le polystyrène.
